# EUROPEAN PATENT APPLICATION

(11) **EP 4 089 201 A1**
(43) Date of publication of application: **16.11.2022**
(21) Application number: 21173139.3
(22) Date of filing: 10.05.2021
(51) Int. Cl.: C23C 18/16, C23C 18/20, C23C 18/24, C25D 5/56, C23C 18/30

(54) **METHOD FOR TREATING A NON-METALLIC SUBSTRATE FOR SUBSEQUENT METALLIZATION**

(71) Applicant: Atotech Deutschland GmbH & Co. KG, 10553 Berlin (DE)
(72) Inventor: Bayer, Frank, 10553 Berlin (DE); Merschky, Michael, 10553 Berlin (DE); Weiss, Thorsten, 10553 Berlin (DE)
(74) Representative: Atotech Deutschland GmbH & Co. KG

(57) **Abstract**

The present invention relates to a method, and respective use, for treating a non-metallic substrate for subsequent metallization, the method comprising step (A), optional step (B), and step (C), wherein step (C) comprises a contacting with an acidic treatment composition comprising one or more than one manganese species, characterized in that the substrate is a 3D-printed substrate.

## Description

### Field of the Invention

The present invention relates to a method, and respective use, for treating a non-metallic substrate for subsequent metallization, the method comprising step (A), optional step (B), and step (C), wherein step (C) comprises a contacting with an acidic treatment composition comprising one or more than one manganese species, characterized in that the substrate is a 3D-printed substrate.

### Background of the Invention

Metallizing non-metallic substrates such as plastic substrates has a long history in modern technology. Typical applications are found in automotive industry as well as for sanitary articles.

However, making a plastic substrate receptive for a metal layer is demanding. Typically, a respective method starts with a surface modification of the substrate's surface, typically known as etching. Usually, a sensitive balance is required in order to ensure a sufficient surface roughening on the one hand without causing too strong defects on the other hand.

A variety of methods and etching compositions are known, including compositions comprising chromic acid. Chromic acid is highly corrosive and a strong oxidant. It therefore very efficiently and strongly etches plastic substrates. As a result, a chromic acid etch is in many cases still the state-of-the-art treatment to render a respective substrate receptive for a subsequent metallization.

However, chromic acid etching compositions are not sustainable and environmentally very questionable. This is in particular a problem, if alternatives to chromic acid etching compositions are not available or only provide unsatisfying/insufficient results; e.g. for specific non-metallic substrates such as 3D-printed substrates. Although in its chemical nature 3D-printed substrates appear basically identical to traditionally manufactured non-metallic substrates, it turned out in many practical trials that treatment compositions working well for traditionally manufactured non-metallic substrates do not show identical results for 3D-printed non-metallic substrates but rather often inferior results. It is presently not fully understood what the reason for such a different behavior is.

However, there is a strong demand, in particular an industrial demand, to treat 3D-printed non-metallic substrates in such a way that a uniform coverage with a subsequently deposited metal layer is obtained without using hexavalent chromium species.

### Objective of the present Invention

It is therefore an objective of the present invention to provide a method for treating a non-metallic, 3D-printed substrate for subsequent metallization that (i) does not utilize environmentally questionable hexavalent chromium species such as chromic acid. It is furthermore an objective to achieve an equally distributed treatment result all over the substrate's surface such that a uniform coverage with a subsequently deposited metal layer is obtained. Most preferably, no blistering of such a metal layer is observed after a heat treatment.

### Summary of the Invention

Above mentioned objectives are solved by a method for treating a non-metallic substrate for subsequent metallization, the method comprising the steps
(A) providing the substrate,
(B) optionally, contacting the substrate provided in (A) with a pre-treatment composition such that a pre-treated substrate is obtained, the pre-treatment composition comprising
   (B-a) one or more than one fluorine-free surface-active compound, and
(C) contacting the substrate provided in (A) or the pre-treated substrate obtained after (B) with an acidic treatment composition in a treatment compartment such that a treated substrate for subsequent metallization is obtained, the acidic treatment composition comprising
   (C-a) one or more than one manganese species,
   characterized in that the substrate is a 3D-printed substrate.

The present invention is primarily based on the finding that an acidic treatment composition comprising one or more than one manganese species provides very good treatment results prior to a metallization of non-metallic, 3D-printed substrates. Since manganese-based treatment compositions are less environmental critical, they provide an excellent alternative to chromic acid etching compositions. Furthermore, typically manganese-based treatment compositions as defined throughout the present text are often providing even improved results (see examples below).

### Detailed Description of the Invention

### Step (A):

In step (A) of the method of the present invention, the substrate is provided, which is a non-metallic substrate.

In the context of the present invention, the term "3D-printed substrate" is understood identically to the term "additive manufactured (AM) substrate". It is assumed that these terms have identical meaning.

Furthermore, in the context of the present invention it is relevant that the non-metallic substrate is a 3D-printed substrate, i.e. was manufactured by such a manufacturing method. It is preferably not relevant whether the non-metallic substrate is manufactured within the method of the present invention (i.e. directly, preferably as a partial step of step (A)) or whether the non-metallic substrate is manufactured at a different location and/or time prior to the method of the present invention and then relocated and/or stored before the method of the present invention is carried out (i.e. indirectly). Preferably, the process for manufacturing the 3D-printed substrate is independent from the method of the present invention as long as such a substrate is provided. As a matter of fact, it is not yet fully understood in which ways non-metallic, 3D-printed substrates distinguish over traditionally manufactured non-metallic substrates of basically the same material.

However, in some cases a method of the present invention is preferred, wherein in step (A) providing includes
(A-1) 3D-printing such that the 3D-printed substrate is obtained.
   Generally preferred is a method of the present invention, wherein in step (A) providing includes
(A-1) 3D-printing such that the 3D-printed substrate is obtained and directly or indirectly provided in step (A).

In the context of the present invention, said 3D-printed substrate preferably comprises a progressively manipulated material, preferably in layer increments, to form said substrate. Most preferably, said 3D-printed substrate is the correspondence of a digital, 3D-computer model.

Preferred is a method of the present invention, wherein said 3D-printed substrate is a 3D-printed plastic substrate.

Preferred is a method of the present invention, wherein in step (A) the 3D-printed substrate is not a casted and not an injection molded substrate.

Preferred is a method of the present invention, wherein in step (A) the 3D-printed substrate is selected from the group consisting of (i) fused filament fabricated substrates, (ii) photopolymerized substrates, (iii) powder bed fused substrates, and (iv) material jetted substrates.

Preferred is a method of the present invention, wherein the fused filament fabricated substrates comprise fused deposition modelled (FDM) substrates.

Preferred is a method of the present invention, wherein the photopolymerized substrates comprise stereolithography (SLA) substrates, digital light processed (DLP) substrates, and/or continuous digital light processed (CDLP) substrates.

Preferred is a method of the present invention, wherein the powder bed fused substrates comprise multi jet fused (MJF) substrates and/or selective laser sintered (SLS) substrates.

Furthermore, preferred is a method of the present invention, wherein the substrate provided in step (A) is not contacted prior to step (C) with any composition comprising a chromium species.

From the chemical point of view, preferred is a method of the present invention, wherein in step (A) the 3D-printed substrate comprises at least an acrylonitrile butadiene styrene, a carbonate, an epoxy, an acrylate, an urethane, an amide, a propylene, oligomers thereof, polymers thereof, mixtures thereof, and/or composites thereof.

Preferred is a method of the present invention, wherein in step (A) the 3D-printed substrate comprises a thermoplastic substrate. A preferred thermoplastic substrate comprises acrylonitrile butadiene styrene (ABS), acrylonitrile butadiene styrene - polycarbonate (ABS-PC).

More preferred is a method of the present invention, wherein in step (A) the 3D-printed substrate comprises butadiene moieties, preferably polybutadiene.

Also preferred is a method of the present invention, wherein in step (A) the 3D-printed substrate comprises nitrile moieties, preferably polymerized nitrile moieties.

Also preferred is a method of the present invention, wherein in step (A) the 3D-printed substrate comprises acryl moieties, preferably polymerized acryl moieties.

Very preferred is a method of the present invention, wherein in step (A) the 3D-printed substrate comprises polymerized styrene moieties.

Very preferred is a method of the present invention, wherein in step (A) the 3D-printed substrate comprises urethane moieties, preferably polymerized urethane moieties.

Very preferred is a method of the present invention, wherein in step (A) the 3D-printed substrate comprises epoxy moieties, preferably polymerized epoxy moieties.

Very preferred is a method of the present invention, wherein in step (A) the 3D-printed substrate comprises carbonate moieties, preferably polymerized carbonate moieties.

Very preferred is a method of the present invention, wherein in step (A) the 3D-printed substrate comprises amide moieties, preferably polymerized amide moieties.

Very preferred is a method of the present invention, wherein in step (A) the 3D-printed substrate comprises propylene moieties, preferably polymerized propylene moieties.

Most preferred is a method of the present invention, wherein in step (A) the substrate comprises acrylonitrile butadiene styrene (ABS), acrylonitrile butadiene styrene - polycarbonate (ABS-PC), polypropylene (PP), polyamide (PA), polyurethane (PU), polyepoxide (PE), polyacrylate, polyetherimide (PEI), a polyetherketone (PEK), mixtures thereof, and/or composites thereof; preferably acrylonitrile butadiene styrene (ABS), acrylonitrile butadiene styrene - polycarbonate (ABS-PC), polyamide (PA), polyurethane (PU), polyepoxides (PE), polyacrylate, mixtures thereof, and/or composites thereof. Such plastic substrates are typically used in decorative applications such as automotive parts, in particular ABS and ABS-PC.

Very preferred is a method of the present invention, wherein the polyamide (PA) comprises a polyamide selected from the group consisting of PA 6, PA 66, PA 11, PA 12, and mixtures thereof.

Preferred is a method of the present invention, wherein the polyetherketone (PEK) comprises polyaryletherketone (PAEK), poly ether ether ketone (PEEK), poly ether ether ether ketone (PEEEK), poly ether ether ketone ketone (PEEKK), poly ether ketone ether ketone ketone (PEKEKK), poly ether ketone ketone (PEKK), and/or mixtures thereof, preferably poly ether ether ketone (PEEK), polyaryletherketone (PAEK), and/or mixtures thereof.

In some cases, a method of the present invention is preferred, wherein in step (A) the 3D-printed substrate comprises a composite, preferably a composite comprising fibers and/or particles, most preferably a composite comprising glass fibers and/or glass fiber particles.

In the context of the present invention, besides optional step (B), additional steps after step (A) and prior to step (C) are preferably not excluded. Such additional steps preferably include one or more than one post-treatment step of the 3D-printed substrate after its manufacturing. A preferred post-treatment step comprises a chemical and/or mechanical polishing step. Alternative or additional typical post-treatment steps are not necessarily excluded. In the context of the present invention, such a respective 3D-printed substrate (i.e. which is already treated by one or more than one post-treatment step) is either already provided in step (A) or a 3D-printed substrate not being treated by a typical post-treatment step is provided in step (A) and one or more than one respective post-treatment step is optionally carried out prior to step (C) of the method of the present invention.

### Step (B):

In the context of the present invention, step (B) is optionally and therefore not necessarily needed. However, in some cases a method of the present invention is preferred, wherein step (B) is included.

Optional step (B) utilizes a pre-treatment composition comprising one or more than one fluorine-free surface-active compound. As a result of such a pre-treatment, a pre-treated substrate, i.e. a pre-treated, non-metallic, 3D-printed substrate is obtained. In the context of the present invention the term "surface-active compound" is equal to (and therefore interchangeable with) "surfactants" and "wetting agent". For the purpose of this invention it is assumed that all these terms have a fully identical meaning.

Preferred is a method of the present invention, wherein the pre-treated substrate is not rinsed after step (B) and prior to step (C), most preferably if step (B) is carried out.

Own experiments have shown that the surface of the pre-treated substrate remains sufficiently wetted with the one or more than one fluorine-free surface-active compound contained in the pre-treatment composition. Thus, preferred is a method of the present invention, wherein after step (B) at least a portion of (B-a) remains on the substrate while the substrate is transferred to step (C).

The fluorine-free surface-active compounds remaining on the substrate are present in a sufficient amount for the subsequent treatment in step (C) (as defined throughout the present text) to excellently treat the non-metallic, 3D-printed substrate, even if it has a sophisticated geometry. It appears that it is of great benefit if the surface is already covered with a surface-active compound prior to contacting in step (C). Preferably, under such conditions no surface-active compounds are additionally needed in the etching composition at all. As a result, the total concentration of surface-active compounds in the acidic treatment composition is kept to a minimum.

Preferred is a method of the present invention, wherein the acidic treatment composition utilized in step (C) is substantially free of, preferably does not comprise, fluorine-containing surface-active compounds, most preferably if step (B) is carried out.

Preferred is a method of the present invention, wherein the pre-treatment composition comprises water, preferably is an aqueous pre-treatment composition.

Preferred is a method of the present invention, wherein the pre-treatment composition comprises 50 wt.-% or more water, based on the total weight of the pre-treatment composition, preferably 60 wt.-% or more, more preferably 70 wt.-% or more, even more preferably 80 wt.-% or more, yet even more preferably 90 wt.-% or more, most preferably 95 wt.-% or more.

Preferred is a method of the present invention, wherein water is the only solvent in the pre-treatment composition.

However, in some other cases it is preferred that the pre-treatment composition comprises less than 50 wt.-% water, based on the total weight of the pre-treatment composition. Preferably, it depends on the total weight of acids in the etching composition whether the pre-treatment composition comprises the amounts of water as specified before. In some cases, it is preferred that the amount of water in the pre-treatment composition is roughly identical to the amount of water in the etching composition. Thus, preferred is a method of the present invention, wherein the amount of water in the pre-treatment composition is within a range of ± 20% of the amount of water in the etching composition, preferably ± 10%, more preferably ± 5%. However, this is not particularly limiting to the method of the present invention. In other cases, it is preferred that the pre-treatment composition comprises water in a much higher amount than the etching composition.

In some cases, a method of the present invention is preferred, wherein the pre-treatment composition and the acidic treatment composition comprise identical acids, preferably identical inorganic acids (regarding acids in the acidic treatment composition, see text below).

The pre-treatment composition comprises (B-a), i.e. one or more than one fluorine-free surface-active compound. Thus, these compounds are neither fully nor partly fluorinated.

Preferred is a method of the present invention, wherein said one or more than one fluorine-free surface-active compound is saturated. More preferred, the one or more than one fluorine-free surface-active compound consists of carbon atoms, hydrogen atoms, and oxygen atoms.

Preferred is a method of the present invention, wherein said one or more than one fluorine-free surface-active compound is linear. Thus, they are preferably not branched compounds, and most preferably the pre-treatment composition is substantially free of, preferably does not comprise, branched surface-active compounds.

Preferred is a method of the present invention, wherein in (B-a) the one or more than one fluorine-free surface-active compound comprises a non-ionic surfactant, preferably a non-ionic alkyl polyethylene glycol ether, more preferably a non-ionic alcohol alkoxylate, most preferably a non-ionic fatty alcohol ethoxylate.

More preferred is a method of the present invention, wherein in the non-ionic alcohol alkoxylate the alcohol comprises 6 to 20 carbon atoms, preferably 7 to 18, more preferably 8 to 16, even more preferably 9 to 14, most preferably 10 to 12. This preferably applies likewise to the very preferred non-ionic fatty alcohol ethoxylate.

Preferred is a method of the present invention, wherein in the non-ionic alcohol alkoxylate the alkoxylate comprises 10 to 30 carbon atoms, preferably 12 to 28, more preferably 14 to 26, even more preferably 16 to 24, most preferably 18 to 22. This preferably applies likewise to the very preferred non-ionic fatty alcohol ethoxylate.

Preferred is a method of the present invention, wherein the non-ionic alcohol alkoxylate comprises a total of 20 to 40 carbon atoms, preferably 22 to 38, more preferably 24 to 36, even more preferably 26 to 34, most preferably 28 to 32. This preferably applies likewise to the very preferred non-ionic fatty alcohol ethoxylate.

Very preferred is a method of the present invention, wherein the non-ionic alcohol alkoxylate comprises a total of 28 to 34 carbon atoms, wherein thereof the alcohol comprises 10 to 12 carbon atoms and the alkoxylate 18 to 22 carbon atoms. This preferably applies likewise to the very preferred non-ionic fatty alcohol ethoxylate.

Most preferred is a method of the present invention, wherein said one or more than one fluorine-free surface-active compound is the only surface-active compound utilized throughout step (B), preferably throughout steps (B) and (C).

Preferred is a method of the present invention, wherein in the pre-treatment composition (B-a) has a total concentration ranging from 0.01 wt.-% to 40 wt.-%, based on the total weight of the pre-treatment composition, preferably from 0.1 wt.-% to 30 wt.-%, even more preferably from 0.2 wt.-% to 20 wt.-%, yet even more preferably from 0.3 wt.-% to 10 wt.-%, most preferably from 0.4 wt.-% to 5 wt.-%. Most preferably these total concentrations apply with the proviso that (B-a) comprise said preferred fluorine-free surface-active compounds as defined above.

As mentioned above, the pre-treatment composition preferably comprises water. In many cases, preferred is a method of the present invention, wherein in the pre-treatment composition water and (B-a) together form 98 wt.-% or more of the total weight of the pre-treatment composition, preferably 98.5 wt.-% or more, more preferably 99 wt.-% or more, even more preferably 99.5 wt.-% or more, yet even more preferably 99.9 wt.-% or more, most preferably 99.99 wt.-% or more.

In some cases, a method of the present invention is preferred, wherein the pre-treatment composition (essentially) consists of water and (B-a).

Preferred is a method of the present invention, wherein in step (B) the pre-treatment composition has a pH ranging from 1 to 9, preferably from 1.5 to 7.5 more preferably from 2 to 6.5, even more preferably from 2.5 to 5.5, most preferably from 3 to 5. It is generally preferred that the pH is acidic.

In some cases a method of the present invention is preferred, wherein in step (B) the pre-treatment composition has a pH within a range being ±3 of the pH of the etching composition, preferably ±2, more preferably ±1.5, even more preferably ±1, most preferably ±0.5.

Most preferred is a method of the present invention, wherein the pH of the pre-treatment composition and the acidic treatment composition is acidic, preferably is acidic and substantially identical.

Preferred is a method of the present invention, wherein in step (B) the contacting is carried out for a time ranging from 20 seconds to 15 minutes, preferably from 1 minute to 10 minutes, most preferably from 2 minutes to 6 minutes.

Preferred is a method of the present invention, wherein in step (B) the contacting is carried out at a temperature ranging from 20°C to 70°C, preferably from 22°C to 60°C, more preferably from 25°C to 50°C, most preferably from 30°C to 40°C.

### Step (C):

In step (C) of the method of the present invention the substrate provided in (A) or the pre-treated substrate obtained after (B) is contacted with an acidic treatment composition in a treatment compartment such that a treated substrate for subsequent metallization is obtained. The acidic treatment composition comprises (C-a), i.e. one or more than one manganese species.

In the context of the present invention, treating for subsequent metallization by means of the acidic treatment composition preferably includes an etching.

Preferred is a method of the present invention, wherein the acidic treatment composition in step (C) is not a chromic acid etching composition. Furthermore, preferred is a method of the present invention, wherein the acidic treatment composition in step (C) is substantially free of, preferably does not comprise, chromic acid and chromium trioxide, respectively.

Preferred is a method of the present invention, wherein the acidic treatment composition is substantially free of, preferably does not comprise, trivalent chromium ions and hexavalent chromium compounds; preferably is substantially free of, preferably does not comprise, any ions and compounds comprising chromium.

Preferred is a method of the present invention, wherein the acidic treatment composition is substantially free of, preferably does not comprise, HF; preferably is substantially free of, preferably does not comprise, fluoride ions.

In the context of the present invention, the one or more than one manganese species present in the acidic treatment composition include the active manganese species such that the pre-treated substrate is treated in step (C). In other words, these manganese species are interacting with the 3D-printed substrate in such a way that it is treated in step (C) for subsequent metallization.

Preferably and without wishing to be bound by theory, active manganese species (preferably along with an acid; for acids see text below) typically oxidize the material of the 3D-printed substrate while they are in turn are reduced to (inactive or less active) manganese species typically having a lower oxidation number than before. During this process a treatment pattern is formed on the 3D-printed substrate. In some cases, preferred is a method of the present invention, wherein in step (C) the one or more than one manganese species in the acidic treatment composition are at least partially formed by means of an electrical current. This most preferably applies if the electrical current is used to form active manganese species from inactive species (recycling).

Preferred is a method of the present invention, wherein the acidic treatment composition has a pH of 6.5 or below, more preferably of 5 or below, even more preferably of 3.5 or below, yet even more preferably of 2.5 or below, most preferably of 1.5 or below, even most preferably of 0.5 or below.

Preferred is a method of the present invention, wherein the acidic treatment composition has a pH of -1 or more, preferably of 0 or more, more preferably of 0.5 or more, most preferably of 1 or more; preferably the acidic treatment composition has a pH of -1 or more, preferably of 0 or more, more preferably of 0.5 or more, most preferably of 1 or more.

Preferred is a method of the present invention, wherein the acidic treatment composition has a pH ranging from -1 to 6.5, preferably from 0 to 6, more preferably from 0.5 to 5.

Own experiments have shown that acidic treatment compositions typically show better results compared to alkaline treatment compositions. This most preferably applies to treatment compositions utilized in the method of the present invention in particular comprising permanganate ions. Although permanganate ions are significantly less stable in an acidic environment, in many cases advantages in further treatment steps are obtained A preferred and desired advantage is that in a subsequent activation step (for further information see text below about step (D)), typically only low amounts of palladium are required for activation. This most preferably applies to an activation with colloidal palladium. Furthermore, the method of the present invention can be applied to a very broad variety of 3D-printed substrates (see examples below in the text). Thus, the method of the present invention allows a high flexibility. Although alkaline manganese-based treatment compositions may provide some useful results to some 3D-printed substrates, the method of the present invention is broadly applicable. In addition, in many cases, after a treatment with an alkaline manganese-based treatment composition an undesired blistering after heat-treatment was observed.

Preferred is a method of the present invention, wherein in the acidic treatment composition (C-a) has a total concentration ranging from 0.001 mol/L to 1.8 mol/L, based on the total volume of the acidic treatment composition and based on the element manganese, preferably ranging from 0.002 mol/L to 1.4 mol/L, more preferably ranging from 0.01 mol/L to 1.1 mol/L, most preferably ranging from 0.05 mol/L to 0.9 mol/L. In the context of the present invention, the total concentration (preferably also the preferred concentrations defined throughout the text) include the active and inactive manganese species, respectively. However, in industrial applications a steady flow of active manganese species is typically provided, preferably by a feed and bleed approach or by a recycling procedure, preferably a recycling procedure by means of applying an electrical current. This is also preferred in the context of the method of the present invention.

In some case, a method of the present invention is preferred, wherein in the acidic treatment composition (C-a) has a total concentration ranging from 0.0025 mol/L to 0.3 mol/L, based on the total volume of the acidic treatment composition and based on the element manganese, preferably ranging from 0.004 mol/L to 0.2 mol/L, more preferably ranging from 0.007 mol/L to 0.1 mol/L, most preferably ranging from 0.009 mol/L to 0.05 mol/L. This most preferably applies if the acidic treatment composition comprises permanganate ions and most preferably in addition phosphoric acid (for acids see text below).

In other cases, a method of the present invention is preferred, wherein in the acidic treatment composition (C-a) has a total concentration ranging from 0.1 mol/L to 1.8 mol/L, based on the total volume of the acidic treatment composition and based on the element manganese, preferably ranging from 0.2 mol/L to 1.6 mol/L, more preferably ranging from 0.3 mol/L to 1.4 mol/L, most preferably ranging from 0.4 mol/L to 1.2 mol/L. This most preferably applies if the acidic treatment composition comprises permanganate ions and additionally sulfuric acid, preferably permanganate ions and additionally 0.005 mol/L to 0.6 mol/L sulfuric acid (compare Example section below, first set of examples).

Preferred is a method of the present invention, wherein in the acidic treatment composition the one or more than one manganese species comprises permanganate ions and/or manganese species comprising the element manganese in an oxidation number of +IV.

Preferably, in some cases, the manganese species comprising the element manganese in an oxidation number of +IV are Mn(IV) ions.

Preferably, in some cases, the manganese species comprising the element manganese in an oxidation number of +IV are colloidal. Preferably, the manganese species comprising the element manganese in an oxidation number of +IV comprises MnO₂, preferably colloidal MnO₂.

In many cases, preferred is a method of the present invention, wherein in the acidic treatment composition the one or more than one manganese species comprises permanganate ions.

In contrast, in some other cases, preferred is a method of the present invention, wherein the acidic treatment composition is substantially free of, preferably does not comprise, permanganate ions, preferably is substantially free of, preferably does not comprise, permanganate ions but instead comprises manganese species comprising the element manganese in an oxidation number of +IV (preferably as described above). More preferably, in such a case the etching composition comprises additionally manganese species comprising the element manganese in an oxidation number of +11 and/or (preferably and) +III.

As already pointed out, the treatment composition utilized in step (C) is acidic, and therefore preferably comprises one or more than one acid. Thus, preferred is a method of the present invention, wherein the acidic treatment composition further comprises
(C-b) one or more than one acid, preferably one or more than one inorganic acid, most preferably one or more than one inorganic acid selected from the group consisting of sulfuric acid, phosphoric acid, and nitric acid.

Regarding the presence and absence of certain acids as described hereinafter, reference is also made to the examples below, which preferably also apply to the method of the present invention in general.

In some cases, preferred is a method of the present invention, wherein the one or more than one inorganic acid comprises at least phosphoric acid.

In some other cases, preferred is a method of the present invention, wherein the one or more than one inorganic acid comprises at least sulfuric acid.

In some cases, very preferred is a method of the present invention, wherein the one or more than one inorganic acid is substantially free of, preferably does not comprise, sulfuric acid. Furthermore, preferred is a method of the present invention, wherein the one or more than one inorganic acid is substantially free of, preferably does not comprise, sulfuric acid but rather comprises phosphoric acid.

In some cases, preferred is a method of the present invention, wherein the one or more than one acid does not comprise organic acids.

Generally preferred is a method of the present invention, wherein the acidic treatment composition in step (C) has a density ranging from 0.9 g/cm³ to 1.9 g/cm³, preferably from 0.95 g/cm³ to1.7 g/cm³.

In some cases, preferred is a method of the present invention, wherein the acidic treatment composition has a density in a range from 1.50 g/cm³ to 1.90 g/cm³, referenced to a temperature of 25°C, preferably from 1.55 g/cm³ to 1.80 g/cm³, more preferably from 1.60 g/cm³ to 1.70 g/cm³, most preferably from 1.61 g/cm³ to 1.68 g/cm³. This is most preferably the case if the acidic treatment composition comprises significant amounts of an acid, preferably of one or more than one inorganic acid, more preferably sulfuric acid and phosphoric acid, most preferably sulfuric acid and phosphoric acid, wherein the total molar amount of phosphoric acid is higher than the total molar amount of sulfuric acid.

In some other cases, preferred is a method of the present invention, wherein the acidic treatment composition has a density in a range from 1.15 g/cm³ to 1.49 g/cm³, referenced to a temperature of 25°C, preferably from 1.22 g/cm³ to 1.41 g/cm³, more preferably from 1.24 g/cm³ to 1.39 g/cm³, most preferably from 1.26 g/cm³ to 1.38 g/cm³. This is most preferably the case if the acidic treatment composition comprises significant amounts of phosphoric acid, most preferably in a total amount ranging from 7 mol/L to 12 mol/L, based on the total volume of the acidic treatment composition.

In yet some other cases, preferred is a method of the present invention, wherein the acidic treatment composition has a density in a range from 0.9 g/cm³ to 1.3 g/cm³, referenced to a temperature of 25°C, preferably from 0.93 g/cm³ to 1.2 g/cm³, more preferably from 0.95 g/cm³ to 1.1 g/cm³. This is most preferably the case if the acidic treatment composition comprises sulfuric acid, most preferably in a total amount ranging from 0.02 mol/L to 1 mol/L, based on the total volume of the acidic treatment composition, preferably from 0.04 mol/L to 0.7 mol/L, more preferably from 0.06 mol/L to 0.6 mol/L, even more preferably from 0.07 mol/L to 0.5 mol/L, most preferably from 0.08 mol/L to 0.4 mol/L.

Preferred is a method of the present invention, wherein the acidic treatment composition further comprises
(C-c) one or more than one species of transition metal ions different from manganese, preferably selected from the group consisting of titanium, zirconium, niobium, molybdenum, ruthenium, rhodium, nickel, copper, silver, palladium, zinc, and cadmium.

In the acidic treatment composition, (C-c) preferably stabilizes the acidic treatment composition and/or accelerates the treatment in step (C). For example, palladium ions in the acidic treatment composition affect the treatment quality insofar that in a subsequent palladium activation step a comparatively low concentration of palladium is required for efficient and sufficient activation, compared to an acidic treatment composition not comprising palladium ions. In addition, the treatment quality itself directly after the treatment is typically also improved if palladium ions are present.

Preferably, (C-c) is present in only small amounts.

Very preferred is a method of the present invention, wherein (C-c) is selected from the group consisting of nickel, copper, palladium, and silver, more preferably (C-c) comprises copper and/or silver ions, most preferably (C-c) comprises silver ions.

Preferred is a method of the present invention, wherein in the acidic treatment composition (C-c) (preferably the copper and the silver ions together, most preferably the silver ions) has a total concentration ranging from 0.1 mmol/L to 150 mmol/L, based on the total volume of the acidic treatment composition, preferably from 0.3 mmol/L to 120 mmol/L, more preferably from 0.5 mmol/L to 100 mmol/L, even more preferably from 0.8 mmol/L to 80 mmol/L, yet even more preferably from 1 mmol/L to 60 mmol/L, most preferably from 1.5 mmol/L to 40 mmol/L.

The acidic treatment composition can also comprise surface-active compounds.

Preferred is a method of the present invention, wherein the one or more than one fluorine-free surface-active compound in the pre-treatment composition is at least partly dragged out from the pre-treatment composition and dragged in into the acidic treatment composition. This is primarily possible because between step (B) and (C) preferably no rinse is applied, i.e. the pre-treated substrate is preferably directly transferred from process step (B) to process step (C).

More preferred is a method of the present invention, wherein any total amount of fluorine-free surface-active compounds in the acidic treatment composition originates from the pre-treatment composition.

Preferred is a method of the present invention, wherein in step (C) in the acidic treatment composition fluorine-free surface-active compounds have an average total concentration ranging from 0.01 wt.-% to 1 wt.-%, based on the total weight of the etching composition, preferably from 0.02 wt.-% to 0.5 wt.-%, more preferably from 0.03 wt.-% to 0.2 wt.-%, most preferably from 0.04 wt.-% to 0.1 wt.-%. Average denotes during normal continuous operation such that continually surface-active compounds are dragged in into the etching composition and some are dragged out and/or decomposed.

Preferred is in some cases a method of the present invention, wherein in step (C) the acidic treatment composition has a surface tension of 69 mN/m or below, preferably of 68 mN/m or below, more preferably of 66 mN/m or below, even more preferably of 63 mN/m or below, yet even more preferably of 59 mN/m or below, almost most preferably of 55 mN/m or below, most preferably of 50 mN/m or below.

Preferred is a method of the present invention, wherein in step (C) no electrical current is applied to treat the substrate. This means that the process of treating the 3D-printed substrate itself is purely chemical based and no electrical current is involved. This does not exclude an electrical current utilized to re-oxidize (i.e. recycle) manganese species with lower oxidation number to manganese species with a higher oxidation number.

Preferred is a method of the present invention, wherein in step (C) the contacting is carried out for a time ranging from 1 minute to 120 minutes, preferably from 2 minutes to 80 minutes, more preferably from 3 minutes to 60 minutes, even more preferably from 5 minutes to 45 minutes, yet even more preferably from 6 minutes to 30 minutes, most preferably from 8 minutes to 15 minutes. A contacting ranging from 8 minutes to 15 minutes is most preferred for substrates comprising ABS and/or ABS-PC. A longer contacting is typically preferred if the substrate comprises a polyetherketone (PEK), preferably about 60 minutes or less.

Preferred is a method of the present invention, wherein in step (C) the contacting is carried out at a temperature ranging from 25°C to 80°C, preferably from 30°C to 75°C, even more preferably from 35°C to 70°C, most preferably from 40°C to 60°C.

As already mentioned above and if step (B) is carried out, in the method of the present invention commonly used fluorinated surface-active compounds are not used and can be completely prevented. Thus, preferred is a method of the present invention, wherein the pre-treatment composition and the acidic treatment composition are substantially free of, preferably do not comprise, fluorinated surface-active compounds.

More preferred is a method of the present invention, wherein the pre-treatment composition and the acidic treatment composition comprise identical fluorine-free surface-active compounds. However, they preferably differ in its concentration significantly. Most preferably, they both comprise only identical fluorine-free surface-active compounds (i.e. in terms of surface-active compounds).

Preferred is a method of the present invention, wherein the treatment compartment is a tank, preferably a tank comprising a chemical resistance against the acidic treatment composition. Most preferred, the treatment compartment is an etching compartment, preferably an etching tank.

Preferred is a method of the present invention, wherein the substrate provided in (A) or the pre-treated substrate obtained after (B) is contacted in step (C) by immersing said substrate into the treatment composition, preferably for the time periods as defined throughout the text.

Preferred is a method of the present invention additionally comprising after step (C) the step
(D) contacting the treated substrate with an activation composition such that an activated substrate is obtained.

In this way the method of the present invention is not only a method for treating a non-metallic, 3D-printed substrate for subsequent metallization but furthermore includes a method for activating such a substrate.

In many cases a rinsing between steps (C) and (D) is preferred, more preferably with water. In some cases, after step (C) a contacting with a reducing-agent containing composition is preferably carried out in order to chemically reduce residual amounts of the one or more than one manganese species on the substrate to a (more) soluble manganese species. Preferably, the rising is carried out to easily remove any residual manganese species originating from step (C).

In the method of the present invention, preferably step (C) is a step separated and independent from step (D). In other words, the acidic treatment composition utilized in step (C) is not the activation composition utilized in step (D). This applies *mutatis mutandis* to steps (B) and (C); i.e. the acidic treatment composition utilized in step (C) is not the pre-treatment composition utilized in step (B).

Preferred is a method of the present invention, wherein in step (D) the activation composition comprises palladium, preferably dissolved palladium ions or colloidal palladium, most preferably colloidal palladium. Preferably, the colloidal palladium additionally comprises tin.

Preferred is a method of the present invention, wherein in step (D) the activation composition comprises palladium in a total concentration ranging from 5 mg/L to 200 mg/L, based on the total volume of the activation composition, preferably ranging from 10 mg/L to 150 mg/L, more preferably from 15 mg/L to 80 mg/L, even more preferably from 17 mg/L to 50 mg/L, most preferably from 20 mg/L to 40 mg/L. Preferably, this total concentration applies to both dissolved palladium ions and colloidal palladium, preferably colloidal palladium. Above concentrations are based on the element palladium.

Preferred is a method of the present invention, wherein in step (D) the activation composition has a temperature ranging from 25°C to 70°C, preferably from 28°C to 60°C, more preferably from 30°C to 55°C, even more preferably from 32°C to 50°C, most preferably from 35°C to 46°C.

Preferred is a method of the present invention, wherein in step (D) the contacting is carried out for a time ranging from 1 minute to 15 minutes, preferably from 2 minutes to 12 minutes, more preferably from 2.5 minutes to 9 minutes, most preferably from 3 minutes to 7 minutes.

Preferred is a method of the present invention, wherein step (D) comprises step
(D-1) contacting the activated substrate with an accelerator composition to modify the activated substrate, the accelerator composition comprising
- no reducing agent but at least one complexing agent for tin ions, if in step (D) the activation composition comprises colloidal palladium, or
- a reducing agent for reducing palladium ions to metallic palladium, if in step (D) the activation composition comprises palladium ions but no colloidal palladium.

Preferred is a method of the present invention, wherein in step (D-1) the accelerator composition comprises no reducing agent but at least one complexing agent for tin ions and is acidic, preferably comprising in addition sulfuric acid.

Preferred is a method of the present invention additionally comprising after step (D) the step
(E) contacting the activated substrate with a first metalizing composition such that a first metal or metal alloy layer is deposited thereon resulting in a first metalized substrate.

In this way the method of the present invention is not only a method for treating and activating a 3D-printed substrate but is furthermore a method for metallizing such a substrate.

More preferred is a method of the present invention additionally comprising after step (C) the step
(D) contacting the treated substrate with an activation composition such that an activated substrate is obtained;
   and/or
(E) contacting the treated substrate or the activated substrate with a first metalizing composition such that a first metal or metal alloy layer is deposited thereon resulting in a first metalized substrate.

In some cases a method of the present invention is preferred, wherein the first metal or metal alloy layer is directly deposited onto the treated substrate (direct metallization), wherein in other cases a method of the present invention is preferred, wherein the first metal or metal alloy layer is deposited onto the activated substrate.

Generally preferred is a method of the present invention, wherein the contacting with the first metalizing composition is carried out without an electrical current. This means that this contacting is preferably electroless.

Preferred is a method of the present invention, wherein the first metalizing composition comprises nickel ions and preferably a reducing agent for said nickel ions. Thus, preferably the first metal or metal alloy layer is a nickel or nickel alloy layer, respectively.

Preferred is a method of the present invention additionally comprising after step (D) or (E), the step
(F) contacting the activated substrate or the first metallized substrate with a second metalizing composition such that a second metal or metal alloy layer is deposited thereon resulting in a second metalized substrate.

Preferred is a method of the present invention, wherein the contacting with the second metalizing composition is carried out in the presence of an electrical current. This means that this contacting is preferably an electrolytic contacting.

Preferred is a method of the present invention, wherein the second metalizing composition comprises copper ions and preferably is acidic. Thus, preferably the second metal or metal alloy layer is a copper or copper alloy layer, respectively.

The present invention furthermore refers to a use of an acidic treatment composition (preferably as utilized in the method of the present invention) comprising
(C-a) one or more than one manganese species
for treating 3D-printed substrates for subsequent metallization.

The aforementioned regarding the method of the present invention, including the preferred features thereof, preferably applies likewise to the use of the present invention.

The invention will now be illustrated by reference to the following non-limiting example.

### Examples

Throughout the following examples, "E" denotes examples according to the invention, wherein "CE" denotes comparative examples not according to the invention.

### First set of Examples:

In the following examples, substrate materials as defined in Table 1 were tested. Examples according to the first set of examples are representatives of a treatment composition comprising comparatively high amounts of permanganate but a rather low total amount of acids.

| | |
|---|---|
| Pre-etch composition: | 300ml/L EDGA |
| Pre-etch parameters: | Pre-etch time: 2 to 5 minutes (see Table 1) |
| | Pre-etch temperature: 35°C |

This pre-etch does not correspond to a pre-treatment with a pre-treatment composition according to optional step (B).

| | |
|---|---|
| treatment composition: | 100 g/L potassium permanganate (appr. 0.6 mol/L), |
| | 11 g/L sulfuric acid (appr. 0.1 mol/L) and |
| | copper ions as stabilizer |
| treatment parameters: | 10 to 15 minutes (see Table 1) |
| | 70°C, and |
| | moderate air purging |

After the treatment (preferably an etching), the treated substrates were further treated with a reducing composition to reduce particulate manganese species into a soluble form.

Afterwards, the reduced substrates were treated with an activation composition comprising colloidal palladium (appr. 5 minutes, 45°C, below 80 mg/L Pd) for subsequent electroless nickel plating, followed by electrolytic copper plating.

The copper plated substrates were visually inspected. The coverage with copper was in each case good. Furthermore, typically no blistering appeared even after heat treatment (1 hour at 70°C).

**Table 1:**

| No. | Material | 3D-Printing Method | Pre-Etch t [min] | Etch t [min] | Coverage |
|---|---|---|---|---|---|
| E1 | Poly epoxide | CDLP | 3 | 10 | Good |
| E2 | Poly acrylate | SLA | 3 | 10 | Good |
| E3 | Poly amide* | MJF | 3 | 10 | Good |
| E4 | Poly urethane | CDLP | 5 | 15 | Good |
| E5 | ABS | FDM | 2 | 10 | Good |
| E6 | ABS-PC | FDM | 4 | 10 | Good |
| | | | | | |
| CE1 | Poly epoxide | CDLP | N/A | 10 | Good |
| CE2 | Poly acrylate | SLA | N/A | 10 | Bad |
| CE3 | Poly amide | MJF | N/A | 10 | Good |
| CE4 | Poly urethane | CDLP | N/A | 10 | Good |

| | | | | | |
|---|---|---|---|---|---|
| * including Polyamide 11 (PA11) and Polyamide 12 (PA12) | | | | | |

In Table 1, abbreviations have the following meaning:
- CDLP: Continuous Digital Light Processing (a photopolymerization method)
- SLA: Stereolithography (a photopolymerization method)
- MJF: Multi Jet Fusion (a powder bed fusion method)
- FDM: Fused Deposition Modeling (a material extrusion method)

Examples E1 to E4 were repeated as comparative examples (CE1, CE2, CE3, and CE4, respectively) with a commonly known chromic acid etch (approximately 380 g/L chromic acid, 380 g/L sulfuric acid, 10 minutes, 68°C) for comparative purposes. In most cases also a good coverage after chromic acid etch was obtained (see Table 1). However, in comparative Example CE2 (poly acrylate, SLA) a totally insufficient coverage was obtained. Furthermore, in all comparative examples an undesired blistering was observed.

The first set of examples can be summarized as follows: First, the examples according to the invention provide a very good alternative to harmful chromic acid etching compositions, which is so far still considered as a reference method. Thus, harmful chromic acid can be effectively avoided by the method of the present invention, i.e. by utilizing an acidic treatment composition comprising high amounts of permanganate ions in a comparatively low amount of sulfuric acid. Second, in most cases an even better result was obtained compared to results obtained with a chromic acid etch. It was observed in all comparative examples with good coverage that after the chromic acid etch an undesired blistering was observed either directly after plating or at latest after a heat treatment. In contrast, in the examples according to the present invention of the first set of examples, such blistering did typically not occur.

Particularly excellent results were obtained in Example E3, which showed not only a good coverage but additionally an extraordinary high peel strength for both, PA11 as well as PA12. Furthermore, E2 shows that poly acrylate can be treated such that a good coverage is obtained, wherein comparative example CE2 does not allow for a suitable coverage with a chromic acid etch. This confirms the broad utilization of the method of the present invention to a variety of 3D-printed substrates.

### Second set of Examples:

In the following examples, substrate materials as defined in Table 2 were tested. In the second set of examples a treatment was tested without the need for (i) a pre-etch and (ii) a chemical reducing of particulate manganese species to form soluble manganese species. Thus, examples according to the second set of examples required less process steps and can be used e.g. in facilities with comparatively little space. Examples according to the second set of examples are representatives of a basically permanganate-free treatment composition but rather providing other manganese species.

| | |
|---|---|
| treatment composition: | 5 to 6 g/L in total of manganese species; comprising at least appr. 2 g/L colloidal Mn(IV) species, up to 1 g/L Mn(III) species, and up to 0.7 g/L Mn(ll) species, |
| | appr. 4 mol/L sulfuric acid, |
| | appr. 9 mol/L phosphoric acid, |
| | 5 to 20 mmol/L silver ions, and |
| | no surface-active compounds and no palladium and permanganate ions |
| treatment parameters: | 10 to 20 minutes (see Table 2), |
| | 40°C, and |
| | moderate air purging |

After the treatment (preferably an etching), the treated substrates were rinsed with water in a rinsing step. No treatment with a reducing agent-comprising composition was needed to chemically reduce particulate manganese species into a soluble form. If particulate manganese species were present, they were rinsed off in a rinsing step.

Afterwards, the rinsed substrates were treated with an activation composition comprising colloidal palladium (appr. 5 minutes, 40°C, below 80 mg/L Pd) for subsequent electroless nickel plating and electrolytic copper plating.

The copper plated substrates were visually inspected. Again, the coverage with copper was in each case good.

**Table 2:**

| No. | Material | 3D-Printing Method | Etch t [min] | Coverage |
|---|---|---|---|---|
| E7 | Poly epoxide | CDLP | 20 | Good |
| E8 | Poly acrylate | SLA | 15 | Good |
| E9 | Poly urethane | CDLP | 20 | Good |
| E10 | ABS | FDM | 10 | Good |
| E11 | ABS-PC | FDM | 20 | Good |

In Table 2, abbreviations have the following meaning:
- CDLP: Continuous Digital Light Processing (a photopolymerization method)
- SLA: Stereolithography (a photopolymerization method)
- FDM: Fused Deposition Modeling (a material extrusion method)

Again, also examples according to the second set of examples provide a very good alternative to harmful chromic acid etching compositions. Furthermore, with the shortened sequence of steps and utilizing a treatment composition typically free of permanganate, a good coverage was obtained, too.

Particularly good results were obtained in Example E7, which showed not only a good coverage but additionally a very reasonable peel strength. Furthermore, E8 shows that poly acrylate can be treated also with this treatment composition such that a good coverage is obtained, wherein comparative example CE2 does not allow for a suitable coverage with a chromic acid etch for such a material. Again, the broad utilization of the method of the invention is confirmed.

### Third set of Examples:

In the following examples, substrate materials as defined in Table 3 were tested. Again, in the third set of examples a treatment was tested without the need for (i) a pre-etch and (ii) a chemical reducing of particulate manganese species to form soluble manganese species. Examples according to the third set of examples are representatives of a treatment composition comprising comparatively low amounts of permanganate but a rather high total amount of acids.

| | |
|---|---|
| treatment composition: | 5 to 10 mmol/L permanganate ions, |
| | appr. 10 mol/L phosphoric acid, and |
| | no surface-active compounds |
| treatment parameters: | 2 to 20 minutes, |
| | 40°C, and |
| | moderate air purging |

After the treatment (preferably an etching), the treated substrates were rinsed with water in a rinsing step. Again, no treatment with a reducing agent-comprising composition was needed to chemically reduce particulate manganese species into a soluble form. If particulate manganese species were present, they were rinsed off in a rinsing step.

Afterwards, the rinsed substrates were treated with an activation composition comprising colloidal palladium (appr. 5 minutes, 40°C, below 80 mg/L Pd) for subsequent electroless nickel plating and electrolytic copper plating.

The copper plated substrates were visually inspected. The coverage with copper was in each case good. Furthermore, typically no blistering appeared even after heat treatment (1h at 70°C).

**Table 3:**

| No. | Material | 3D-Printing Method | Etch t [min] | Coverage |
|---|---|---|---|---|
| E12 | Poly epoxide | CDLP | 20 | Good |
| E13 | Poly epoxide | CDLP | 10 | Good |
| E14 | Poly acrylate | SLA | 10 | Good |
| E15 | Poly acrylate | SLA | 5 | Good |
| E16 | Poly amide* | MJF | 5 | Good |
| E17 | Poly amide* | MJF | 2 | Good |
| E18 | Poly urethane | CDLP | 10 | Good |
| E19 | ABS | FDM | 8 | Good |
| E20 | ABS-PC | FDM | 15 | Good |
| E21 | Poly amide* | SLS | 3 | Good |

| | | | | |
|---|---|---|---|---|
| * including Polyamide 11 (PA11) and Polyamide 12 (PA12) | | | | |

In Table 3, abbreviations have the following meaning:
- CDLP: Continuous Digital Light Processing (a photopolymerization method)
- SLA: Stereolithography (a photopolymerization method)
- MJF: Multi Jet Fusion (a powder bed fusion method)
- FDM: Fused Deposition Modeling (a material extrusion method)
- SLS: Selective Laser Sintering (powder bed fusion method)

Again, examples according to the third set of examples provided a very good alternative to harmful chromic acid etching compositions. Furthermore, with the shortened sequence of steps and utilizing a treatment composition comprising a comparatively low concentration of permanganate in a comparatively high total amount of acids, a good coverage was obtained, too.

In addition, typically even better results were obtained compared to results obtained with the chromic acid etch. It was again observed in all comparative examples with good coverage that after a chromic acid etch an undesired blistering was observed either directly after plating or at latest after a heat treatment. In contrast, in all examples according to the invention of the third set of examples, such blistering did typically not occur.

Particularly excellent results were obtained in Examples E16 and E17, which showed not only a good coverage but additionally an extraordinary high peel strength for both, PA11 as well as PA12. Again, an excellent result was obtained for poly acrylate.

All examples according to the invention show that the acidic treatment composition utilized in the method of the present invention provides good results over a broad variety of 3D-printed substrates. This is a significant advantage over e.g. alkaline treatment compositions comprising permanganate.

## Claims

1. A method for treating a non-metallic substrate for subsequent metallization, the method comprising the steps
(A) providing the substrate,
(B) optionally, contacting the substrate provided in (A) with a pre-treatment composition such that a pre-treated substrate is obtained, the pre-treatment composition comprising
(B-a) one or more than one fluorine-free surface-active compound,
and
(C) contacting the substrate provided in (A) or the pre-treated substrate obtained after (B) with an acidic treatment composition in a treatment compartment such that a treated substrate for subsequent metallization is obtained, the acidic treatment composition comprising
(C-a) one or more than one manganese species,
**characterized in that** the substrate is a 3D-printed substrate.

2. The method of claim 1, wherein in step (A) providing includes
(A-1) 3D-printing such that the 3D-printed substrate is obtained.

3. The method of claim 1 or 2, wherein in step (A) the 3D-printed substrate is selected from the group consisting of (i) fused filament fabricated substrates, (ii) photopolymerized substrates, (iii) powder bed fused substrates, and material jetted substrates.

4. The method of any one of claims 1 to 3, wherein in step (A) the 3D-printed substrate comprises at least an acrylonitrile butadiene styrene, a carbonate, an epoxy, an acrylate, an urethane, an amide, a propylene, oligomers thereof, polymers thereof, mixtures thereof, and/or composites thereof.

5. The method of any one of claims 1 to 4, wherein the acidic treatment composition has a pH of 6.5 or below, more preferably of 5 or below, even more preferably of 3.5 or below, yet even more preferably of 2.5 or below, most preferably of 1.5 or below, even most preferably of 0.5 or below.

6. The method of any one of claims 1 to 5, wherein in the acidic treatment composition (C-a) has a total concentration ranging from 0.001 mol/L to 1.8 mol/L, based on the total volume of the acidic treatment composition and based on the element manganese, preferably ranging from 0.002 mol/L to 1.4 mol/L, more preferably ranging from 0.01 mol/L to 1.1 mol/L, most preferably ranging from 0.05 mol/L to 0.9 mol/L.

7. The method of any one of claims 1 to 6, wherein in the acidic treatment composition the one or more than one manganese species comprises permanganate ions and/or manganese species comprising the element manganese in an oxidation number of +IV.

8. The method of any one of claims 1 to 7, wherein the acidic treatment composition further comprises
(C-b) one or more than one acid, preferably one or more than one inorganic acid, most preferably one or more than one inorganic acid selected from the group consisting of sulfuric acid, phosphoric acid, and nitric acid.

9. The method of any one of claims 1 to 8, wherein the acidic treatment composition further comprises
(C-c) one or more than one species of transition metal ions different from manganese, preferably selected from the group consisting of titanium, zirconium, niobium, molybdenum, ruthenium, rhodium, nickel, copper, silver, palladium, zinc, and cadmium.

10. The method of any one of claims 1 to 9, wherein the acidic treatment composition is substantially free of, preferably does not comprise, HF; preferably is substantially free of, preferably does not comprise, fluoride ions.

11. The method of any one of claims 1 to 10, wherein the acidic treatment composition is substantially free of, preferably does not comprise, trivalent chromium ions and hexavalent chromium compounds; preferably is substantially free of, preferably does not comprise, any ions and compounds comprising chromium.

12. The method of any one of claims 1 to 11, wherein in step (C) the contacting is carried out at a temperature ranging from 25°C to 80°C, preferably from 30°C to 75°C, even more preferably from 35°C to 70°C, most preferably from 40°C to 60°C.

13. The method of any of claims 1 to 12 additionally comprising after step (C) the step (D)
contacting the treated substrate with an activation composition such that an activated substrate is obtained;
and/or
(E) contacting the treated substrate or the activated substrate with a first metalizing composition such that a first metal or metal alloy layer is deposited thereon resulting in a first metalized substrate.

14. The method of any of claims 1 to 13 additionally comprising after step (D) or (E), the step
(F) contacting the activated substrate or the first metallized substrate with a second metalizing composition such that a second metal or metal alloy layer is deposited thereon resulting in a second metalized substrate.

15. A use of an acidic treatment composition comprising
(C-a) one or more than one manganese species
for treating 3D-printed substrates for subsequent metallization.
